# FASCICULE DE BREVET EUROPEEN

(11) **EP 2 582 919 B1**
(45) Date de publication et mention de la délivrance du brevet: **05.08.2015**
(21) Numéro de dépôt: 11735507.3
(22) Date de dépôt: 16.06.2011
(51) Int. Cl.: F01D 5/26, F01D 9/04, F01D 25/24

(54) **SECTEUR ANGULAIRE DE REDRESSEUR POUR COMPRESSEUR DE TURBOMACHINE, REDRESSEUR DE TURBOMACHINE ET TURBOMACHINE COMPRENANT UN TEL SECTEUR**
LEITSCHAUFELSEGMENT EINES VERDICHTERS EINER TURBOMASCHINE, LEITSCHAUFELGITTER EINER TURBOMASCHINE UND TURBOMASCHINE MIT EINEM SOLCHEN LEITSCHAUFELSEGMENT
VANE SEGMENT FOR A TURBOMACHINE COMPRESSOR, TURBOMACHINE GUIDE VANES AND TURBOMACHINE INCLUDING SUCH A VANE SEGMENT

(30) Priorité: 18.06.2010 FR 1054849
(43) Date de publication de la demande: 24.04.2013
(60) Demande divisionnaire: 15173476.1
(73) Titulaire: Snecma, 75015 Paris (FR)
(72) Inventeur: CLOAREC, Yvon, F-77250 Ecuelles (FR)
(74) Mandataire: Henrich, Christel
(86) Numéro de dépôt international: PCT/FR2011/051372
(87) Numéro de publication internationale: WO 2011/157956

(56) Documents cités:
- EP-A1- 1 980 715
- EP-A2- 1 811 131
- EP-A2- 1 870 562
- WO-A2-2010/094277
- DE-A1-102007 059 220
- US-A- 3 326 523
- US-A- 5 681 142
- US-A- 5 846 050

## Description

### Arrière-plan de l'invention

La présente invention concerne le domaine général des redresseurs pour compresseur de turbomachine, telle qu'un turboréacteur ou un turbopropulseur d'avion.

Un compresseur de turbomachine est constitué d'une pluralité d'étages de compression formés chacun d'une rangée annulaire d'aubes mobiles montées sur un arbre de la turbomachine et d'un redresseur monté sur un carter annulaire externe de la turbomachine.

Un redresseur de compresseur peut être constitué d'un anneau, ou il peut être sectorisé (i.e. constitué d'une pluralité de secteurs angulaires reliés bout-à-bout circonférentiellement autour de l'axe longitudinal du compresseur). Tout au long de la présente demande, on entendra par « secteur angulaire de redresseur» (ou «secteur de redresseur» pour plus de concision), tout secteur angulaire de redresseur dont l'angle est égal ou inférieur à 360°.

Chaque secteur de redresseur comprend une virole externe et une virole interne disposées coaxialement l'une à l'intérieur de l'autre, et une (ou plusieurs) pale(s) s'étendant radialement entre ces viroles et raccordée(s) à celles-ci par ses (leurs) extrémité(s) radiale(s).

Le montage de chaque secteur angulaire de redresseur sur le carter annulaire externe de la turbomachine est réalisé, par exemple, par le biais de pattes de montage prévues à chaque extrémité axiale de la virole externe dudit secteur et destinées à être engagées dans des gorges correspondantes du carter.

En fonctionnement, un tel secteur de redresseur est soumis à de fortes sollicitations mécaniques, tant statiques que vibratoires.

Dans des redresseurs connus de l'art antérieur dans lesquels les bords d'attaque et de fuite des pales sont raccordés à des parties très épaisses et très rigides de la virole externe, ces sollicitations mécaniques sont essentiellement reprises par les zones du bord d'attaque et du bord de fuite raccordées à la virole externe du secteur de redresseur. Comme ces zones de raccordement sont minces et peu résistantes, un risque existe que les bords d'attaque et de fuite soient endommagés, voire même détruits.

Le document EP 1,811,131 propose de soulager les bords d'attaque et de fuite des pales des secteurs de redresseurs en diminuant la rigidité à l'emplanture des pales du redresseur afin d'optimiser la transition des efforts depuis les pales vers la virole externe. Pour cela, les bords d'attaque et/ou de fuite des pales sont raccordés à des zones de la virole externe qui sont moins rigides que celles raccordées notamment aux pattes de montage de cette virole externe. Toutefois, cette solution n'apporte pas un amortissement suffisant au niveau des zones de raccordement des bords d'attaque et de fuite des pales sur la virole externe, pour éviter efficacement une rupture des pales due aux vibrations.

### Objet et résumé de l'invention

La présente invention a pour objectif de proposer un secteur angulaire de redresseur permettant de limiter efficacement les contraintes mécaniques auxquelles est soumise, en fonctionnement, chaque pale du secteur de redresseur, et en particulier ses bords d'attaque et/ou de fuite.

Ce but est atteint avec un secteur angulaire de redresseur pour compresseur de turbomachine selon la revendication 1, s'étendant autour d'un axe de symétrie radiale, comportant une virole externe et une virole interne disposées coaxialement l'une à l'intérieur de l'autre, et au moins une pale s'étendant radialement entre les dites viroles et raccordée à celles-ci par ses extrémités radiales, dans lequel la virole externe comporte des premier et second moyens de montage du secteur angulaire de redresseur sur un carter de la turbomachine, lesdits premier et second moyens de montage étant orientés en direction axiale selon des sens opposés et étant reliés entre eux par une portion intermédiaire, où la virole externe comporte en outre au moins une portion d'extrémité axiale s'étendant depuis ladite portion intermédiaire, munie d'une extrémité libre et raccordée à l'extrémité radiale externe de la pale, et au moins un élément rapporté formant amortisseur est apte à venir en contact avec la portion d'extrémité, et au-delà d'une valeur donnée d'amplitude de vibration de la portion d'extrémité, l'élément amortisseur et la portion d'extrémité sont aptes à se déplacer relativement l'un par rapport à l'autre de manière à faire varier la masse totale en mouvement qui est solidaire de la portion d'extrémité et ainsi à modifier le comportement vibratoire de ladite portion d'extrémité.

Dans la présente demande, sauf précision contraire, l'amont et l'aval sont définis par rapport au sens d'écoulement normal du gaz (de l'amont vers l'aval) à travers la turbomachine. Par ailleurs, on appelle axe de la turbomachine, l'axe de symétrie radiale de la turbomachine. La direction axiale correspond à la direction de l'axe de la turbomachine, et une direction radiale est une direction perpendiculaire à cet axe. De même, un plan axial est un plan contenant l'axe de la turbomachine et un plan radial est un plan perpendiculaire à cet axe. Sauf précision contraire, les adjectifs et adverbes axial, radial, axialement et radialement sont utilisés en référence aux directions axiale et radiale précitées. Enfin, sauf précision contraire, les adjectifs interne et externe sont utilisés en référence à une direction radiale de sorte que la partie ou la face interne (i.e. radialement interne) d'un élément est plus proche de l'axe de la turbomachine que la partie ou la face externe (i.e. radialement externe) du même élément.

Dans la présente demande, on entend par portion d'extrémité axiale une portion de la virole externe s'étendant dans la direction axiale du secteur de redresseur. Avantageusement, cette portion est reliée directement à la partie de la pale où se localise l'activité vibratoire à amortir.

Selon la présente invention, l'élément rapporté formant amortisseur permet de contrecarrer les déplacements radiaux de la portion d'extrémité en fonctionnement, de sorte que les niveaux vibratoires des pales raccordées à cette portion d'extrémité peuvent être limités. L'interaction entre l'élément amortisseur et la portion d'extrémité est expliquée plus en détail ci-dessous.

Selon un exemple de fonctionnement, l'élément amortisseur est, au repos, plaqué contre ou tout du moins au contact ou solidaire de la portion d'extrémité.

Pour une première plage d'amplitudes de vibration de la portion d'extrémité, l'élément amortisseur et la portion d'extrémité restent solidaires l'un de l'autre et vibrent ensemble. La masse totale en mouvement qui est solidaire de la portion d'extrémité correspond dans ce cas à la somme des masses de la portion d'extrémité et de l'élément amortisseur.

L'élément amortisseur n'est cependant pas lié à la portion d'extrémité par une liaison permanente. Par conséquent, lorsque la portion d'extrémité atteint une activité vibratoire suffisante (i.e. lorsque les déplacements radiaux de la portion d'extrémité atteignent une valeur limite), sous l'effet de l'inertie, l'amortisseur perd le contact ou n'est plus solidaire de la portion d'extrémité. Dès lors, l'élément amortisseur et la portion d'extrémité vibrent séparément et la masse totale en mouvement qui est solidaire de la portion d'extrémité est égale à la seule masse de la portion d'extrémité.

En modifiant la masse totale en mouvement qui est solidaire de la portion d'extrémité, l'élément amortisseur vient contrarier le mode vibratoire et modifie la fréquence de vibration. On évite ainsi que le mode vibratoire du redresseur n'entre en résonance. L'élément amortisseur, soumis à une source excitatrice dont la fréquence ne correspond pas à l'une de ses fréquences propres, n'entre pas en résonance et contribue à contrecarrer les déplacements de la virole du redresseur.

Selon un autre exemple de fonctionnement, le contact entre la portion d'extrémité et l'élément amortisseur, au repos, est incertain (non permanent). Cette perte de contact peut survenir par exemple en cas d'usure des faces de contact. Dans ce cas, pour de faibles vibrations de la portion d'extrémité, la masse totale en mouvement qui est solidaire de cette portion d'extrémité est inférieure à la somme des masses de l'élément amortisseur et de la portion d'extrémité.

Lorsque la portion d'extrémité atteint une activité vibratoire suffisante (i.e. lorsque les déplacements radiaux sont suffisants pour combler le jeu initial existant entre la portion d'extrémité et l'élément amortisseur), l'amortisseur vient se plaquer contre la portion d'extrémité, et sa masse vient s'ajouter à celle de la portion d'extrémité. Là encore, la variation de la masse totale en mouvement qui est solidaire de la portion d'extrémité entraîne une modification de la fréquence de vibration. Du fait de cette modification de fréquence, il n'y a plus de résonance.

Selon un mode de réalisation de l'invention, la portion d'extrémité délimite, avec une languette sensiblement coaxiale disposée radialement à l'extérieur, au moins une cavité débouchant sur une extrémité axiale de la virole externe. En d'autres termes, la virole externe comporte, à au moins une extrémité axiale, une cavité débouchant sur ladite extrémité axiale et s'étendant entre la portion d'extrémité et une languette radiale externe portant l'un parmi les premier et second moyens de montage.

Selon un exemple particulier de réalisation, la virole externe comporte une cavité amont débouchant sur l'extrémité amont de la virole externe et une cavité aval débouchant sur l'extrémité aval de la virole externe, au moins un élément rapporté formant amortisseur étant logé dans au moins une des dites cavités. Selon un exemple de réalisation, au moins un élément rapporté formant amortisseur peut être prévu dans chaque cavité de la virole externe. On comprend que, dans ce cas, la virole externe comporte une portion intermédiaire centrale reliée aux moyens de montage amont et aval de la virole externe, et deux portions d'extrémités axiales, l'une s'étendant vers l'amont, l'autre vers l'aval, depuis cette portion intermédiaire.

Selon un mode de réalisation de l'invention, la virole externe est formée en une seule pièce. En d'autres termes, les moyens de montage, la portion intermédiaire et la ou les portion(s) d'extrémité axiale sont une seule et même pièce. La virole externe peut par exemple être obtenue directement de fonderie. Selon une autre variante de réalisation, sa forme peut également résulter d'une opération d'usinage.

Selon un autre mode de réalisation, tout le secteur de redresseur peut être réalisé en une seule pièce. En d'autres termes, l'ensemble formé par la virole externe, la virole interne et la ou les pales constitue une structure monobloc, plus simple à réaliser et plus résistante qu'un ensemble de plusieurs pièces assemblées entre elles.

Selon un mode de réalisation de l'invention, l'élément amortisseur est une portion d'anneau apte à être montée sans jeu sur la portion d'extrémité axiale de la virole externe. La portion d'anneau peut par exemple être une portion d'un anneau torique ou d'un anneau sensiblement cylindrique.

Selon un mode de réalisation, au moins un évidement présentant une forme complémentaire de celle de l'élément amortisseur est formé sur la portion d'extrémité axiale, formant un moyen de retenue axiale pour l'élément amortisseur.

Selon un mode de réalisation de l'invention, l'élément amortisseur comprend une épingle élastique formant ressort, comportant une portion de manchon et une partie en crochet s'étendant depuis ladite portion de manchon, radialement vers l'extérieur et vers une extrémité axiale ouverte de la virole externe, ladite portion de manchon étant apte à venir en appui radial contre la portion d'extrémité de la virole externe et ladite partie en crochet étant apte à venir en appui radial contre une surface opposée à ladite portion d'extrémité, par exemple contre la languette radiale externe de la virole externe ou contre une face du carter de la turbomachine. Pour l'ensemble de la présente demande, on définit une épingle comme une portion d'anneau comprenant une portion de manchon et une partie en crochet s'étendant, depuis ladite portion de manchon, radialement vers l'extérieur et vers l'extrémité ouverte de la cavité dans laquelle elle est logée.

Selon un autre mode de réalisation de l'invention, la portion de manchon de l'épingle est apte à venir en appui contre la portion intermédiaire de la virole externe. Plus particulièrement, dans le cas où la virole externe comporte une cavité définie entre la portion d'extrémité axiale et une languette radiale externe, la portion de manchon de l'épingle est apte à venir en appui, avec son extrémité axiale dirigée vers l'intérieur de la cavité, contre une partie médiane de la virole externe reliant entre elles la portion d'extrémité et la languette radiale externe et formant le fond de la cavité. Pour cela, la portion de manchon peut par exemple comporter une partie principale sensiblement en portion de cylindre, prolongée, à son extrémité axiale dirigée vers l'intérieur de la cavité, par une portion évasée radialement vers l'extérieur.

La portion de manchon peut en outre comporter au moins un embrèvement sur sa face radiale interne. Un tel embrèvement permet un gain de masse et une meilleure localisation des contacts entre l'épingle et la portion d'extrémité de la virole externe.

Selon un autre mode de réalisation de l'invention, la languette radiale externe de la virole externe présente une saillie dirigée radialement vers l'intérieur de la cavité, ladite saillie formant un taquet de rétention axiale pour ladite épingle. De cette manière, il est possible d'éviter les erreurs de montage, puisque l'épingle est maintenue à l'intérieur de la cavité de la virole externe. En particulier, on évite que l'épingle se déloge de la cavité et soit perdue lors du montage. Cette disposition permet en outre d'éviter un contact direct entre l'épingle et le carter, lequel est ainsi préservé.

Selon un autre mode de réalisation de l'invention, la portion d'extrémité axiale délimite au moins en partie une chambre ou enceinte fermée et étanche, à l'intérieur de laquelle est placé une masselotte ou élément rapporté formant amortisseur.

L'élément amortisseur peut par exemple être un solide, une poudre, notamment une poudre métallique, ou encore un liquide (ou une autre matière en fusion à la température de fonctionnement). De préférence, on choisira pour l'élément amortisseur un matériau dense, par exemple de l'acier, du nickel, du tungstène, de l'uranium appauvri, etc.

Généralement, la chambre sera presque complètement remplie de manière à réduire les déplacements relatifs entre l'élément amortisseur et la chambre.

Dans le cas d'une poudre, la granulométrie sera de préférence choisie très fine de manière à éviter que les paramètres du système ne se modifient dans le temps.

Le mode de fonctionnement est identique à celui explicité précédemment. L'élément amortisseur évolue entre une position dans laquelle il est en contact avec la portion d'extrémité axiale de la virole externe, et une position dans laquelle il n'est plus au contact de cette portion d'extrémité. Dans ce cas, cependant, le martèlement de la portion d'extrémité peut avoir lieu dans les deux directions radialement interne et radialement externe.

De manière générale, pour tous les modes de réalisation de la présente invention, l'amortissement des vibrations de la pale peut être résumé de la façon suivante.

La portion d'extrémité axiale de la virole externe évolue entre une première position limite et une seconde position limite, lorsqu'elle vibre.

Dans l'une au moins de ces deux positions, l'élément amortisseur est en contact avec la portion d'extrémité.

Dans une position intermédiaire entre la première et la seconde position, et/ou, si l'élément amortisseur ne vient au contact de la portion d'extrémité que dans l'une de ces positions, dans l'autre de ces positions, l'élément amortisseur n'est pas en contact avec la portion d'extrémité.

Il existe donc, selon l'invention, au moins un instant t1 où la masse totale en mouvement solidaire de la portion d'extrémité est égale à la masse de cette portion à laquelle s'ajoute celle de l'élément amortisseur, et au moins un instant t2 où cette masse est réduite à la seule masse de la portion d'extrémité.

Par modification de la masse entre les instants t1 et t2, la fréquence est modifiée, de sorte que les vibrations sont amorties et la résonance, évitée.

L'invention concerne également un redresseur de turbomachine formé d'un ou d'une pluralité de secteurs angulaires de redresseur tels que définis précédemment. L'invention concerne encore une turbomachine comportant au moins un tel redresseur.

### Brève description des dessins

D'autres caractéristiques et avantages de l'invention ressortiront à la lecture de la description suivante d'exemples de réalisation de l'invention donnés à titre illustratif et non limitatif. Cette description fait référence aux feuilles de dessins annexées sur lesquelles :
- la figure 1A est une vue partielle et en coupe longitudinale d'un compresseur de turbomachine comprenant au moins un secteur angulaire de redresseur selon un premier mode de réalisation de l'invention ;
- la figure 1B illustre une variante du mode de réalisation de la figure 1A ;
- les figures 2A à 6C sont des vues partielles et en coupe axiale de secteurs angulaires de redresseur selon d'autres modes de réalisation de l'invention.

### Description détaillée de modes de réalisation de l'invention

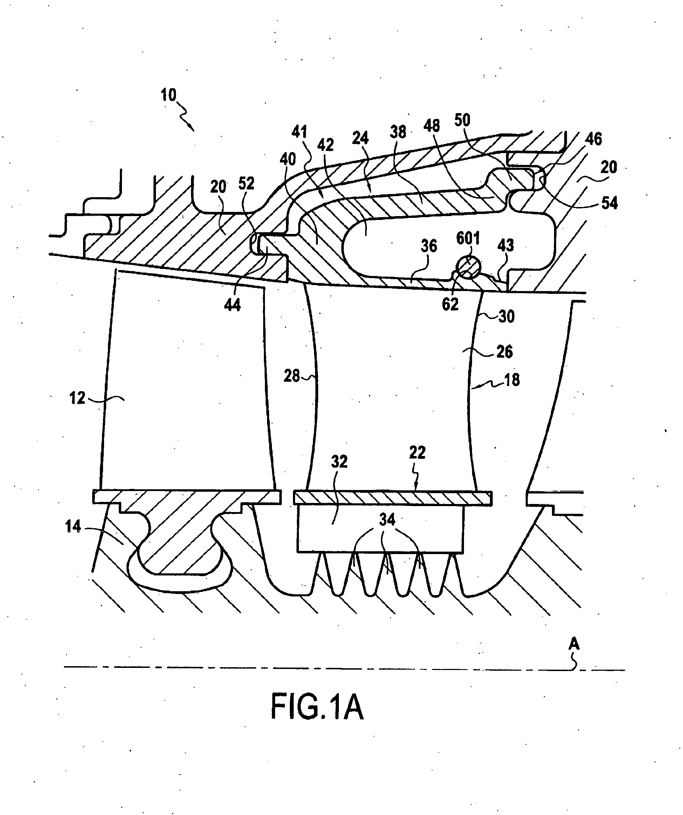

Le compresseur 10 représenté partiellement et schématiquement sur la figure 1A comprend plusieurs étages de compression dont deux seulement ont été représentés. Chaque étage de compression comprend une rangée annulaire d'aubes mobiles 12 montées sur un disque 14 porté par l'arbre de rotor (non représenté) de la turbomachine, et un redresseur fixe 18 porté par un carter externe 20 de turbomachine et constitué par un ou une pluralité de secteurs angulaires de redresseurs mis circonférentiellement bout-à-bout. L'axe de symétrie radiale du compresseur est noté A sur la figure 1A.

Un secteur de redresseur 18 tel que celui représenté sur la figure 1A comprend deux viroles coaxiales interne 22 et externe 24, par exemple en portion de cylindre, s'étendant l'une à l'intérieur de l'autre et reliées l'une à l'autre par une ou plusieurs pales radiales 26. Ces pales 26 ont une surface concave ou intrados et une surface convexe ou extrados qui sont reliées à leurs extrémités amont et aval en formant des bords d'attaque 28 et de fuite 30 de l'air qui s'écoule dans le compresseur 10.

La virole interne 22 porte sur sa surface interne un revêtement abradable 32 destiné à coopérer avec des léchettes radiales 34 portées par l'arbre de rotor (non représenté) afin d'éviter une possible recirculation des gaz sous la virole interne 22.

Dans l'exemple illustré sur la figure 1A, la virole externe 24 du secteur de redresseur 18 est réalisée en une seule pièce et se compose d'une languette radiale interne 36 à laquelle sont reliées les extrémités radiales externes des pales 26, et d'une languette radiale externe 38 coaxiale à ladite languette radiale interne 36, reliées entre elles par une portion médiane 40.

Toujours dans l'exemple illustré, la portion médiane 40 est située à l'extrémité amont de la virole externe 24, et les extrémités amont des languettes radiales interne 36 et externe 38 lui sont directement rattachées. Une cavité 42, débouchant sur l'extrémité aval de la virole externe 36, est ainsi délimitée par les languettes radiales interne 36 et externe 38 (qui forment les parois de la cavité) et la portion médiane 40 (qui constitue le fond de la cavité).

Selon un exemple de réalisation (non représenté), des saignées peuvent en outre être réalisées dans la languette radiale interne 36, entre toutes ou certaines seulement des pales 26 du secteur de redresseur 18.

A chacune de ses extrémités axiales, la virole externe 24 comporte des moyens de montage du secteur de redresseur 18 sur le carter 20 de la turbomachine. Sur la figure 1A, ces moyens de montage comprennent une patte de montage amont 44 sous la forme d'une portion de cylindre s'étendant vers l'amont depuis la portion médiane 40, et une patte de montage aval 46 formée à l'extrémité de la languette radiale externe 38, composée d'une partie en portion d'anneau 48 s'étendant sensiblement radialement vers l'extérieur et d'une partie en portion de cylindre 50 s'étendant vers l'aval depuis l'extrémité radiale externe de cette partie en portion d'anneau 48. Chacune de ces pattes de montage 44, 46 est destinée à coopérer avec une gorge correspondante 52, 54 du carter 20.

Dans cet exemple, la languette radiale externe 38 et la portion médiane 40 forment une portion intermédiaire 41 reliant entre elles les pattes de montage 44, 46.

La languette radiale interne 36 forme une portion d'extrémité axiale s'étendant depuis cette portion intermédiaire 41, munie d'une extrémité libre 43, et raccordée à l'extrémité radiale externe de la pale 26.

On comprend aisément que la portion d'extrémité 36, éloignée des encastrements entre les pattes de montage 44, 46 et les gorges 52, 54 du carter 20, présente une rigidité bien plus faible que les zones (41) de la virole externe 24 directement reliées aux dites pattes 44, 46. La portion d'extrémité 36 est avantageusement la plus fine possible, de manière à la rendre encore plus flexible.

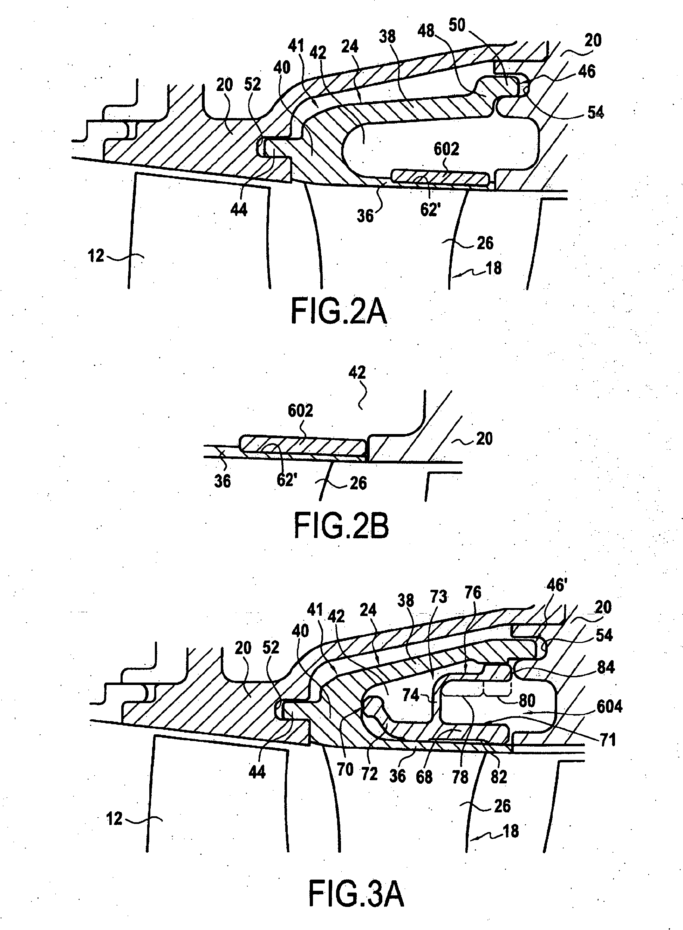

On notera que selon une variante de réalisation simplifiée, représentée sur les figures 3A à 5, la patte de montage aval peut aussi être simplement constituée d'une partie située à l'extrémité de la languette radiale externe 38 et sous forme d'une seule portion de cylindre 46'.

Selon l'invention, la cavité 42 de la virole externe 24 est destinée à recevoir un élément rapporté formant amortisseur (ci-après « élément amortisseur »).

Dans l'exemple de la figure 1A, cet élément amortisseur est un anneau torique destiné à être monté dans la cavité annulaire formée, par exemple, par les cavités 42 respectives d'une pluralité de secteurs de redresseurs 18 raccordés circonférentiellement bout-à-bout pour former le redresseur. Plus précisément, pour un secteur de redresseur donné, l'action d'amortissement est exercée par la portion 601 de cet anneau torique logée dans la cavité 42 du secteur de redresseur et s'étendant sur le même secteur angulaire que ce secteur de redresseur.

L'anneau torique peut être constitué d'une seule partie annulaire. Comme variante, il peut également être constitué de plusieurs parties en portion d'anneau raboutées les unes aux autres pour former un anneau à 360°. Pour cela, chaque portion d'anneau peut comporter, à ses deux extrémités radiales, un élément en forme de crochet, ou tout autre moyen de jonction mécanique de deux pièces en tension.

Une portion de gorge annulaire 62, de forme sensiblement complémentaire à la section de l'anneau prise dans un plan axial, est prévue sur la face externe de la languette radiale interne 36, et forme un moyen de retenue axiale pour la portion d'anneau 601.

De préférence, la portion d'anneau 601 est montée sans jeu sur le secteur de redresseur. Toutefois, son serrage pourra être optimisé dans des cas extrêmes (en particulier à l'instant des résonances des modes critiques), et notamment en fonction de la température, de la dilatation des différentes pièces, etc.

L'action d'amortissement de la portion d'anneau 601 sur la virole externe 24 est réalisée de la manière suivante : Au repos, la portion d'anneau 601 est simplement plaquée contre la languette radiale interne 36 de la virole externe 24. Aucune pièce ne vient bloquer le déplacement radial de la portion d'anneau 601. En outre, aucune liaison permanente du type soudure, brasure, etc. ne solidarise la portion d'anneau 601 et la languette radiale interne 36. En fonctionnement, pour une première plage de valeur d'amplitude de vibration de la languette radiale interne, la portion d'anneau 601 et la languette radiale interne 36 se déplacent solidairement (i.e. les deux pièces vibrent ensemble). Lorsque la languette radiale interne 36 atteint une amplitude de vibration limite, la portion d'anneau 601 se décolle de la languette radiale interne, de sorte que la masse totale en mouvement qui est solidaire de la languette radiale interne varie. Cette modification de la masse et de la raideur de la languette radiale interne entraîne une modification de la fréquence propre du ou des modes de la pièce, laquelle fréquence, ne correspondant plus à celle de la ou des sources excitatrices, va s'atténuer. La situation engendrée par la présence de la portion d'anneau 601 est une situation instable qui présente l'intérêt de ne pas dissiper l'énergie en continu.

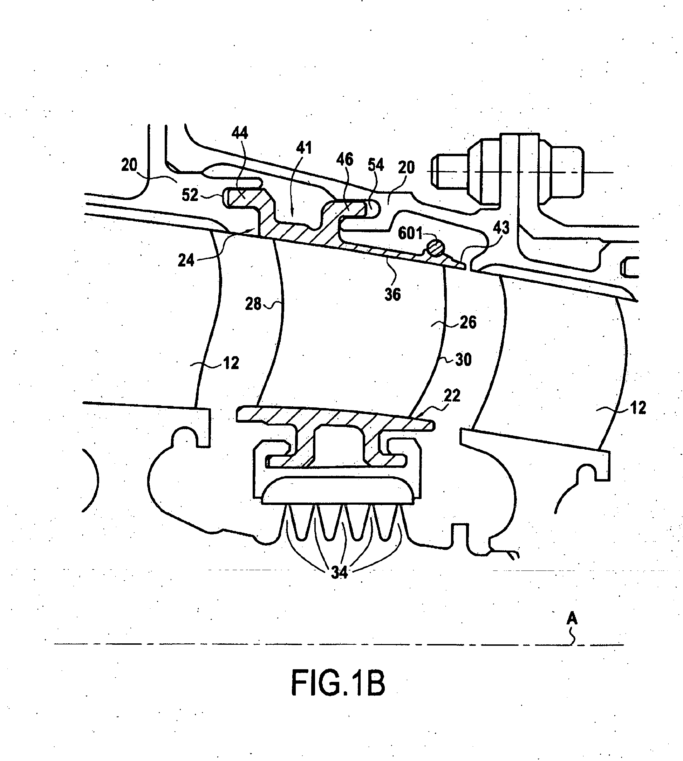

La figure 1B illustre une variante du mode de réalisation de la figure 1A, dans laquelle la virole externe 24 du secteur de redresseur est dépourvue de cavité axiale.

Tout comme dans l'exemple précédent, la virole externe 24 comprend une première patte de montage 44 dirigée vers l'amont, une seconde patte de montage 46 dirigée vers l'aval, et une portion intermédiaire 41 reliée aux deux pattes de montage 44, 46 d'une part et à une portion de l'extrémité supérieure de la pale 26 d'autre part.

Selon cette variante, la seconde patte de montage 46 est située vers le milieu de la virole externe 24, prise dans sa direction axiale, c'est-à-dire plus en amont que dans l'exemple précédent. La virole externe 24 ne comporte pas ici de languette radiale externe.

Seule une portion d'extrémité 36, raccordée à l'extrémité supérieure de la pale 26, en regard d'une portion du carter 20 de turboréacteur, s'étend vers l'aval depuis la portion intermédiaire 41.

L'élément amortisseur 601 décrit précédemment en liaison avec la figure 1A peut être positionné sur cette portion d'extrémité 36, entre la portion intermédiaire 41 et l'extrémité libre 43, pour y fonctionner de manière parfaitement similaire.

Les figures 2A et 2B illustrent un deuxième mode de réalisation de l'invention, dans lequel l'élément amortisseur est une portion 602 d'un anneau cylindrique dont la surface interne est plaquée, au repos, contre la face externe de la languette radiale interne 36. Cette forme permet, par rapport au mode de réalisation des figures 1A et 1B, d'augmenter la surface d'appui entre l'élément amortisseur et la languette radiale interne 36.

Tous les éléments communs au mode de réalisation des figures 1A et 1B et portant les mêmes références numériques ne sont pas décrits une nouvelle fois pour des raisons de concision. Le fonctionnement de l'élément amortisseur 602 est par ailleurs identique à celui décrit en référence à la figure 1A.

Dans l'exemple de la figure 2A, un évidement 62', de forme complémentaire à celle de la portion d'anneau 602, est formé dans la languette radiale interne 36. Cet évidement assure la rétention axiale de la portion d'anneau 602 une fois celle-ci montée dans la cavité 42.

Selon une variante de réalisation avantageuse représentée sur la figure 2B, il peut être prévu que l'évidement 62' débouche sur l'extrémité aval de la virole externe 24. Un tel évidement facilite l'introduction en direction axiale de l'anneau cylindrique qui est, de par sa forme, relativement rigide. La rétention axiale de l'élément amortisseur est dans ce cas assurée grâce à l'évidement 62' d'une part, et grâce à l'appui de la portion d'anneau 602 contre le carter 20, après montage, ou au moins à l'existence d'une surface du carter en regard de l'extrémité axiale de la portion d'anneau 602 une fois celle-ci placée dans l'évidement 62'.

La localisation des contacts entre la portion d'anneau 602 et la languette radiale interne 36 de la virole externe 24 peut en outre être améliorée par un embrèvement (non représenté) prévu sur la face radiale interne de la portion d'anneau 602.

Selon d'autres exemples de réalisation, l'élément amortisseur peut être une portion d'anneau ayant toute autre section ou masse adaptée. Sa position à l'intérieur de la cavité, dans la direction axiale, pourra également être optimisée.

De manière avantageuse, l'élément amortisseur sera positionné dans une zone où les déplacements radiaux de la virole externe sont les plus importants. généralement, l'anneau sera placé le plus près possible du bord libre de la languette radiale interne 36.

La figure 3A illustre un troisième mode de réalisation de l'invention, dans lequel l'élément amortisseur est une épingle élastique 604 formant ressort, destinée à prendre appui contre les languettes radiales interne 36 et externe 38 de la virole externe 24, une fois introduite à l'intérieur de la cavité 42.

Comme il ressort de la figure 3A, l'épingle 604 présente, dans un plan axial, une section en forme de h minuscule dont la partie verticale est couchée sur la languette radiale interne 36 de la virole externe 24. Plus particulièrement, l'épingle 604 est une portion d'anneau comprenant une portion de manchon 71, et une partie en crochet 73 s'étendant, depuis ladite portion de manchon 71, radialement vers l'extérieur et vers l'extrémité ouverte de la cavité 42. La portion de manchon 71 et la partie en crochet 73 forment un ressort venant en appui radial contre la languette radiale interne 36 et la languette radiale externe 38 de la virole externe 24 avec un faible effort de serrage. La souplesse de l'épingle 604 doit en effet être optimisée pour obtenir un bon contact avec les languettes radiales interne et externe, tout en maintenant une souplesse suffisante pour l'amortissement des vibrations de la languette radiale interne, comme il sera expliqué plus en détail dans la suite.

La portion de manchon 71 comprend une partie principale 68 sensiblement en portion de cylindre prolongée, à son extrémité axiale orientée vers l'intérieur de la cavité 42, par une partie évasée radialement vers l'extérieur 72.

Comme il ressort de la figure 3A, une face d'extrémité axiale 70 de la partie évasée 72 peut, après montage, venir s'appuyer contre le fond de la cavité 42, c'est-à-dire contre la portion médiane 40, et plus particulièrement contre une face de cette portion médiane 40 s'étendant sensiblement dans un plan radial.

La face interne de la partie principale 68 vient en appui contre la languette radiale interne 36 de la virole externe 24.

Dans l'exemple, un embrèvement 82 formé sur la face radiale interne de la partie principale 68 permet en outre un gain de masse et une meilleure localisation des contacts entre l'épingle 604 et la languette radiale interne 36 de la virole externe 24.

La portion de manchon 71 est prolongée, à mi-chemin environ entre ses deux extrémités axiales, par la partie en crochet 73 qui comprend une partie médiane 74 en portion d'anneau s'étendant radialement vers l'extérieur depuis la partie principale 68 et une partie d'extrémité 76 sensiblement en portion de cylindre s'étendant, depuis l'extrémité radiale externe de la portion d'anneau 74, vers l'extérieur de la cavité 42 (ici, vers l'aval).

Une face d'extrémité radiale externe de la partie en crochet 73 vient en appui franc contre la languette radiale externe 38.

Pour matérialiser cet appui franc, la partie d'extrémité 76 comporte une portion d'appui sous la forme d'une surépaisseur s'étendant radialement vers l'extérieur, et dont la face radiale externe vient en appui contre la surface en regard de la languette radiale externe 38.

Dans l'exemple représenté sur la figure 3A, la partie d'extrémité 76 est composée d'un premier tronçon mince 78, optimisé en termes de souplesse, relié à la portion d'anneau 74, et d'un second tronçon 80 formant portion d'appui, situé dans le prolongement du premier tronçon 78 et présentant un diamètre radial externe supérieur à celui du premier tronçon 78. La face radiale externe du second tronçon 80 constitue une surface d'appui radial apte à venir au contact de la languette radiale externe 38 de la virole externe 24, une fois l'épingle 604 insérée dans la cavité 42.

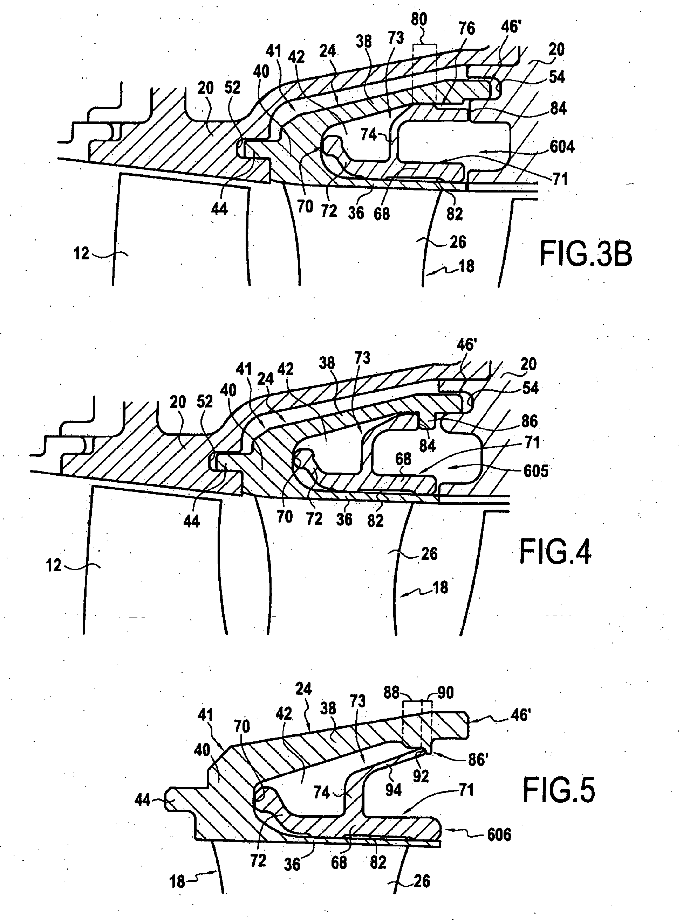

La figure 3B illustre une variante avantageuse de réalisation dans laquelle la portion d'appui (surépaisseur) 80 de la partie d'extrémité 76 est positionnée sensiblement au droit du milieu de l'embrèvement 82, pris dans la direction axiale. Cette disposition permet d'éviter le basculement de l'épingle 604.

L'épingle 604 peut être annulaire ou sectorisée.

Dans le cas où l'épingle 604 est sectorisée, l'angle du secteur angulaire peut être égal, inférieur, ou supérieur à l'angle du secteur de redresseur sur lequel l'épingle est destinée à être montée. Généralement, toutefois, l'épingle s'étendra sur l'ensemble du secteur angulaire de redresseur.

La partie en crochet 73 peut éventuellement se présenter sous la forme d'un ou plusieurs « sous-secteurs » s'étendant chacun, dans la direction circonférentielle, sur une partie seulement du secteur angulaire dans lequel s'inscrit la portion de manchon 71.

Plus spécifiquement, la partie en portion de cylindre 76 peut encore se présenter sous la forme d'un ou de plusieurs « sous-secteurs » de la partie en crochet 73, s'étendant chacun, dans la direction circonférentielle, depuis une partie seulement de la portion d'anneau 74.

Une épingle 604 telle que décrite ci-dessus peut être introduite dans la cavité 42 par glissement tangentiel, avant montage du secteur sur le carter de la turbomachine, dans le cas d'un secteur angulaire de redresseur 18 dont l'angle est inférieur à 360°, ou par glissement dans la direction axiale (notamment dans le cas d'un secteur angulaire de redresseur à 360°).

Comme il ressort des figures 3A et 3B, une fois le montage du redresseur terminé, l'épingle 604 vient en butée, avec son extrémité amont, contre le fond de la cavité 42, et avec l'extrémité aval 84 de la partie en crochet 73, contre le carter 20 de la turbomachine. De cette manière, elle est maintenue en position axialement à l'intérieur de la cavité 42.

Comme variante ou de manière additionnelle, l'épingle 604 peut également, après montage, venir en appui contre le carter 20 avec l'extrémité aval de la portion de manchon 71.

Selon une autre variante de réalisation, la portion principale 68 de l'épingle 604 peut être logée dans un évidement formé dans la languette radiale interne de la virole externe. La rétention axiale de l'épingle 604 est alors assurée de la même manière que pour les portions d'anneau 601 et/ou 602 des modes de réalisation des figures 1, 2A et 2B.

Selon encore un autre exemple, la surépaisseur 80 de la partie en portion de cylindre 76 peut être configurée de façon à former une languette apte à s'insérer au montage dans une rainure correspondante de la languette radiale externe 38, assurant ainsi la rétention axiale de l'épingle 604.

L'épingle 604 pourra également être immobilisée en direction tangentielle par adjonction d'un ergot de blocage ou de tout autre moyen d'arrêt rapporté sur la virole externe.

Au repos, l'épingle 604 est en contact avec les deux parois de la cavité 42 dE la virole externe 24, et en particulier, avec la languette radiale interne 36 de la virole externe 24. Lorsque, en fonctionnement, la valeur de l'amplitude de vibration de la languette radiale interne est inférieure à une valeur limite donnée, l'épingle 604 et la languette radiale interne 36 vibrent tout en restant en contact. Lorsque la languette radiale interne 36 atteint et dépasse cette amplitude limite de vibration, l'épingle 604 se décolle de la languette radiale interne 36, de sorte que la masse totale en mouvement qui est solidaire de la languette radiale interne 36 diminue. Cette modification de la masse et de la raideur de la languette radiale interne 36 entraîne une modification de la fréquence, laquelle, ne correspondant plus à celle de la source excitatrice, va s'atténuer.

Un quatrième mode de réalisation va à présent être décrit en référence à la figure 4.

Dans ce mode de réalisation, l'élément amortisseur est une épingle 605 qui présente la même structure que l'épingle 604 décrite en liaison avec les figures 3A et 3B. En particulier, elle présente également, dans un plan axial, une section en forme de h minuscule dont la partie verticale est couchée sur la languette radiale interne 36 de la virole externe 24. Elle ne sera pas décrite ici plus en détail.

Ce quatrième mode de réalisation diffère uniquement de celui des figures 3A et 3B en ce que la languette radiale externe 38 porte une saillie 86 dirigée radialement vers l'intérieur de la cavité 42, formant taquet de rétention axiale pour l'élément amortisseur sous forme d'épingle 605.

Ainsi, l'extrémité de la partie en crochet 73 vient à la fois en appui radial contre la languette radiale externe 38, et, avec sa face d'extrémité aval 84, en appui axial contre le taquet de rétention 86.

L'épingle 605 est ainsi maintenue axialement à l'intérieur de la cavité 42 de la virole externe 24 et ne peut s'en désengager, notamment au cours du montage ou avant montage du secteur de redresseur 18 sur le carter 20 de la turbomachine. Ces dispositions permettent en outre d'éviter un contact direct entre l'épingle 605 et le carter 20, qui est ainsi protégé contre une usure due aux frottements.

Dans ce mode de réalisation, le montage de l'épingle 605 se fera habituellement par glissement tangentiel.

La figure 5 illustre un cinquième mode de réalisation de l'invention.

Dans ce mode de réalisation, la languette radiale externe 38 porte, sur sa face radiale interne, un taquet de rétention axiale 86' composé d'un premier tronçon 88 et d'un second tronçon 90, de diamètre intérieur inférieur à celui du premier tronçon 88, de sorte qu'un épaulement 92 est formé entre le premier et le second tronçon 88, 90.

Comme dans les troisième et quatrième modes de réalisation décrits précédemment, l'élément amortisseur est une épingle 606 présentant, dans un plan axial, une section en forme de h minuscule dont la partie verticale est en appui contre la languette radiale interne 36 de la virole externe 24.

L'épingle 606 présente une portion de manchon 71 sensiblement identique à celle des épingles 604 et 605, prolongée par une partie en crochet 73 comprenant une partie médiane 74 s'étendant radialement vers l'extérieur, et une partie d'extrémité flexible 94, ici tronconique, s'évasant vers l'extérieur depuis l'extrémité radiale externe de la partie médiane 74.

De par sa forme et sa faible épaisseur, la partie d'extrémité 94 présente des propriétés d'élasticité telles qu'elle est apte, lorsque l'épingle 606 est glissée axialement dans la cavité 42, à fléchir en coopérant avec le second tronçon 90 du taquet de rétention axiale 86 et à se redéployer vers l'extérieur une fois dégagée de celui-ci.

Une fois l'épingle 606 montée dans la cavité 42, la face d'extrémité amont 70 de la portion de manchon 71 vient en appui contre la portion médiane 40 de la virole externe 24, et l'extrémité aval de la portion tronconique 94 est retenue contre l'épaulement 92, ce par quoi l'épingle 606 est maintenue en position à l'intérieur de la cavité 42.

Dans ce mode de réalisation, et dans le cas ou l'épingle 606 est annulaire, un dispositif de démontage doit être prévu.

Ce démontage peut par exemple être facilité si la partie en crochet 73 est tronçonnée et présente des festons ou des créneaux permettant de la faire fléchir pour la faire passer par dessous le second tronçon 90 du taquet de rétention axiale 86.

Dans le cas particulier où le redresseur est par ailleurs constitué d'une pluralité de secteurs angulaires mis bout-bout, un dispositif de démontage doit exister sur au moins l'un des secteurs angulaires, par exemple celui présentant un trou d'endoscope. Dans ce cas, une fois ce secteur démonté, les suivants pourront l'être encore plus facilement par coulissement tangentiel jusqu'à une zone configurée pour permettre leur dégagement, selon le principe d'un système à baïonnette.

Dans l'ensemble des exemples représentés et décrits précédemment, les bords de fuite 30 sont rattachés à l'extrémité de la portion d'extrémité axiale 36 (ici son extrémité aval), qui est éloignée de la portion médiane, plus rigide. Les bords de fuite 30 des pales 26 sont donc rattachés à une partie de la virole externe 24 qui est peu rigide, et en tous cas moins rigide que celle à laquelle sont reliés les bords d'attaque 28 des pales. Cette configuration est particulièrement adaptée au cas où les bords de fuite 30 des pales 26 sont soumis, en fonctionnement, à des déplacements radiaux plus importants que ceux auxquels sont soumis les bords d'attaque 28.

On pourrait envisager, au contraire, que la virole externe 24 comporte une portion intermédiaire 41 à son extrémité aval. Dans ce cas, les bords d'attaque 28 des pales 26 sont rattachés à une partie de la virole externe 24 (i.e. l'extrémité distale de la portion d'extrémité axiale 36) moins rigide que celle à laquelle sont raccordés les bords de fuite 30 des pales 26. Cette configuration est particulièrement adaptée lorsque les bords d'attaque 28 des pales 26 sont soumis, en fonctionnement, à des déplacements radiaux plus importants que ceux auxquels sont soumis les bords de fuite 30.

On pourrait encore envisager que la portion intermédiaire 41 soit située à distance des extrémités axiales de la virole externe 24, et de préférence sensiblement au centre de ladite virole 24, prise dans sa direction axiale.

Dans ce cas, la virole externe 24 peut par exemple comporter deux cavités, l'une amont, débouchant sur l'extrémité amont de la virole externe, et l'autre aval, débouchant sur son extrémité aval. Chaque languette radiale de la virole externe est alors composée de deux parties de languettes, l'une amont, l'autre aval, reliées entre elles par le biais de la portion médiane. La cavité amont est délimitée par une partie de languette radiale interne amont, une partie de languette radiale externe amont, et la portion médiane. De la même manière, la cavité aval est délimitée par une partie de languette radiale interne aval, une partie de languette radiale externe aval et la portion médiane.

On pourra envisager qu'un ou plusieurs éléments rapportés formant amortisseurs soient disposés dans l'une seulement des deux cavités. On pourra également envisager qu'au moins un élément amortisseur soit rapporté dans chacune des cavités de la virole externe.

Cette configuration est notamment adaptée dans le cas où tant les bords d'attaque 28 que les bords de fuite 30 des pales 26 sont soumis à des activités vibratoires importantes, de sorte que des modes vibratoires totalement découplés sont susceptibles d'entrer en résonance séparément au niveau de ces bords d'attaque et de fuite 28, 30.

On notera que l'introduction d'un élément formant butée dans une cavité de la virole externe est d'autant plus aisée que la hauteur et la profondeur de cette cavité sont importantes.

Dans les exemples illustrés sur les figures 1A et 2A à 5, les moyens de montage amont et aval 44, 46, 46' du secteur de redresseur 18 sur le carter 20 de la turbomachine ont donc été décalés l'un par rapport à l'autre dans la direction radiale. De la figure 1A, par exemple, il ressort en particulier que la jonction entre la patte de montage aval 46 (i.e. la patte de montage portée par la languette radiale externe 38, et située du côté de la cavité 42) et la rainure correspondante 54 du carter a été relevée.

Cette disposition permet d'augmenter la hauteur (prise dans la direction radiale) de la virole externe, et donc de la cavité 42.

Dans le cas où la cavité est réalisée par usinage, cette disposition permet, en outre, d'augmenter la profondeur de la cavité 42. En raison des contraintes d'usinage (contraintes notamment liées à l'outillage particulier utilisé), en effet, la hauteur de la cavité 42 conditionne sa profondeur. Plus la hauteur de la cavité 42 est importante, plus la profondeur de la cavité peut être importante également et plus les déplacements radiaux exploités par l'amortisseur seront grands.

On notera que l'ensemble des éléments amortisseurs décrits en liaison avec les figures 2A à 5 peuvent coopérer de la même manière avec une virole externe telle qu'illustrée sur la figure 1B. Dans ce cas, les épingles 604, 605, 606 prennent appui contre la portion d'extrémité 36 d'une part et une face en regard du carter 20 de la turbomachine d'autre part.

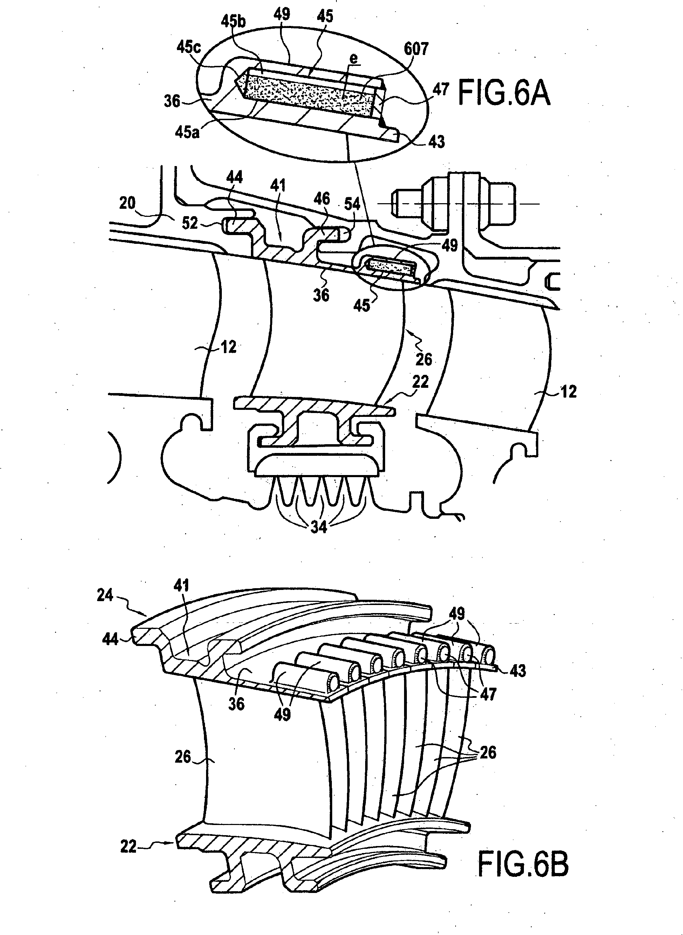

La figure 6A illustre une sixième mode de réalisation de l'invention, dans lequel la portion d'extrémité 36 de la virole externe 24 présente au moins un bossage 49 (représenté sur la figure 6B qui sera décrite plus en détail dans la suite), dans laquelle a été usinée une chambre 45 adaptée à être obturée par un capuchon ou opercule soudé 47.

La chambre 45 est délimitée par une face radialement interne 45a, une face radialement externe 45b et des côtés latéraux 45c.

Elle est remplie, en grande partie, par un élément amortisseur 607 sous la forme d'un liquide, d'une poudre métallique ou d'un élément solide de forme particulière. Comme illustré sur la vue de détail de la figure 6A, un jeu e est conservé, au repos, entre l'élément amortisseur 607 et l'une parmi la face radialement interne 45a et la face radialement externe 45b de la chambre 45 (selon l'orientation du secteur de redresseur).

Pour éviter les fuites, la chambre 45, obturée par le capuchon 47, est totalement étanche.

De préférence, on choisira, pour l'élément amortisseur 607, un matériau très dense, du type acier ou nickel.

Le principe de fonctionnement de ce mode de réalisation s'apparente à ceux décrits précédemment.

Au repos et pour de petites vibrations de la portion d'extrémité, l'élément amortisseur 607 est en contact avec l'une parmi les faces radialement interne et externe de la chambre 45.

Lorsque la portion d'extrémité atteint une amplitude de vibration déterminée, sous l'effet de l'inertie, l'élément amortisseur 607 se déplace pour se retrouver dans une position intermédiaire dans laquelle il n'est au contact d'aucune des faces radialement interne ou externe 45a, 45b de la chambre 45.

A ce moment, la masse totale en mouvement, solidaire de la portion d'extrémité 36, est modifiée.

L'élément amortisseur 607 vient ensuite frapper l'autre parmi la face radialement interne 45a et la face radialement externe 45b de la chambre 45, modifiant une nouvelle fois la masse totale en mouvement.

En modifiant cette masse totale, l'élément amortisseur 607 modifie la fréquence de vibration et permet d'éviter, à terme, les ruptures de pales en fatigue vibratoire.

On notera que si la chambre peut directement être usinée dans la portion d'extrémité 36 de la virole externe comme décrit précédemment, il est également possible de la former en rapportant et en soudant, sur la portion d'extrémité 36, différents éléments formant les côtés latéraux 45c et la face radialement externe 45b de la chambre 45. Dans ce cas, seule la face radialement interne 45a de la chambre 45 est constituée par la portion d'extrémité 36 de la virole externe 24.

La figure 6B illustre, en perspective, un secteur de redresseur selon le présent mode de réalisation. Dans l'exemple, une pluralité de pales s'étend radialement entre la virole interne 22 et la virole externe 24. Pour garantir sa flexibilité, la portion d'extrémité axiale 36 est, de préférence, sectionnée, de sorte que chacune de ses sections porte l'une des pales 26.

Dans l'exemple, la chambre 45 comprenant l'élément amortisseur 607 s'étend sur une portion limitée de la portion d'extrémité 36. L'amortisseur ainsi engendré est donc un amortissement ponctuel.

On notera cependant que la forme ou l'orientation de la chambre 45 n'est pas limitée à l'exemple illustré, l'essentiel étant qu'elle reste placée au point ou à proximité du point de déplacement maximum local de la portion d'extrémité 36.

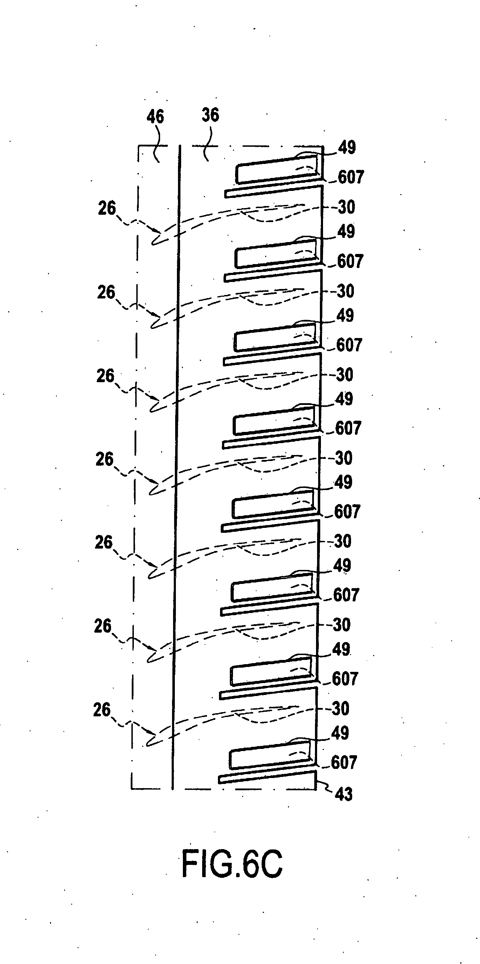

La figure 6C est une vue schématique illustrant le fait que l'élément amortisseur 607 (et donc ici la chambre 45), sera de préférence placé au plus loin de l'emplanture de la pale 26.

## Revendications

1. Secteur angulaire de redresseur (18) pour compresseur de turbomachine s'étendant autour d'un axe de symétrie radiale (A), comportant :
- une virole externe (24) et une virole interne (22) disposées coaxialement l'une à l'intérieur de l'autre, et
- au moins une pale (26) s'étendant radialement entre les dites viroles (22, 24) et raccordée à celles-ci par ses extrémités radiales,
dans lequel la virole externe (24) comporte des premier et second moyens de montage (44, 46) du secteur angulaire de redresseur (18) sur un carter (20) de la turbomachine, lesdits premier et second moyens de montage étant orientés en direction axiale selon des sens opposés et étant reliés entre eux par une portion intermédiaire (41),
dans lequel la virole externe (24) comporte en outre au moins une portion d'extrémité axiale (36) s'étendant depuis ladite portion intermédiaire (41), munie d'une extrémité libre (43) et raccordée à l'extrémité radiale externe de la pale (26),
dans lequel au moins un élément rapporté (601, 602, 603, 604, 605, 60, 607) formant amortisseur est apte à venir en contact avec la portion d'extrémité (36), et e dans lequel, au-delà d'une valeur donnée de l'amplitude de vibration de la portion d'extrémité (36), l'élément amortisseur (601, 602, 603, 604, 605, 606, 607) et la portion d'extrémité (36) sont aptes à se déplacer relativement l'un par rapport à l'autre de manière à faire varier la masse totale en mouvement qui est solidaire de la portion d'extrémité (36), et ainsi à modifier le comportement vibratoire de ladite portion d'extrémité (36),
la virole externe comportant, à au moins une extrémité axiale, une cavité (42) débouchant sur ladite extrémité axiale, ladite cavité (42) s'étendant entre la portion d'extrémité (36) et une languette radiale externe (38) portant l'un parmi les premier et second moyens de montage (44, 46).

2. Secteur angulaire de redresseur selon la revendication 1, dans lequel la virole externe (24) comporte une cavité amont débouchant sur l'extrémité amont de la virole externe et une cavité aval débouchant sur l'extrémité aval de la virole externe, au moins un élément rapporté formant amortisseur étant logé dans au moins une des dites cavités.

3. Secteur angulaire de redresseur selon la revendication 1 ou 2, dans lequel la virole externe (24) est formée en une seule pièce.

4. Secteur angulaire de redresseur selon l'une quelconque des revendications 1 à 3, dans lequel l'élément rapporté formant amortisseur est situé dans la cavité (42) de la virole externe (24).

5. Secteur angulaire de redresseur selon l'une quelconque des revendications 1 à 4, dans lequel l'élément rapporté formant amortisseur est une portion d'anneau (601, 602) apte à être montée sans jeu sur la portion d'extrémité (36) de la virole externe.

6. Secteur angulaire de redresseur selon la revendication 5, dans lequel ladite portion d'anneau (601) est une portion d'un anneau torique.

7. Secteur angulaire de redresseur selon la revendication 5, dans lequel ladite portion d'anneau (602) est une portion d'un anneau sensiblement cylindrique.

8. Secteur angulaire de redresseur selon l'une quelconque des revendications 1 à 7, dans lequel au moins un évidement présentant une forme complémentaire de celle de l'élément rapporté formant amortisseur est formé sur la portion d'extrémité (36), formant un moyen de retenue axiale pour l'élément amortisseur.

9. Secteur angulaire de redresseur selon l'une quelconque des revendications 1 à 4, dans lequel la portion d'extrémité (36) délimite au moins en partie une chambre étanche (45) à intérieur de laquelle est placé l'élément rapporté formant amortisseur (607).

10. Secteur angulaire de redresseur selon la revendication 9, dans lequel l'élément rapporté formant amortisseur (607) est une poudre.

11. Secteur angulaire de redresseur selon la revendication 9, dans lequel l'élément rapporté formant amortisseur (607) est un liquide.

12. Secteur angulaire de redresseur selon l'une quelconque des revendications 1 à 4, dans lequel l'élément amortisseur comprend une épingle (604, 605, 606) formant ressort, comportant une portion de manchon (71) et une partie en crochet (73) s'étendant, depuis ladite portion de manchon (71), radialement vers l'extérieur et vers une extrémité axiale ouverte de la virole externe, ladite portion de manchon (71) étant apte à venir en appui radial contre la portion d'extrémité (36) de la virole externe (24), et ladite partie en crochet (73) étant apte à venir en appui radial contre une surface opposée à ladite portion d'extrémité (36).

13. Secteur angulaire de redresseur selon la revendication 12, dans lequel ladite portion de manchon (71) est apte à venir en appui contre la portion intermédiaire (41) de la virole externe (24).

14. Secteur angulaire de redresseur selon la revendication 12 ou 13, dans lequel la portion de manchon (71) comporte au moins un embrèvement (82) sur sa face radiale interne.

15. Secteur angulaire de redresseur selon l'une quelconque des revendications 12 à 14, dans lequel la languette radiale externe (38) de la virole externe (24) porte une saillie (86) dirigée radialement vers intérieur de la cavité (42), ladite saillie (86) formant un taquet de rétention axiale pour ladite épingle (605, 606).

16. Redresseur de turbomachine formé d'un ou d'une pluralité de secteurs angulaires de redresseur selon l'une quelconque des revendications 1 à 15.

17. Turbomachine comportant au moins un redresseur selon la revendication 16.

## Patentansprüche

1. Leitschaufelsegment (18) eines Verdichters einer Turbomaschine, das sich um eine radiale Symmetrieachse (A) erstreckt, umfassend:
- einen äußeren Ring (24) und einen inneren Ring (22), die koaxial ineinander angeordnet sind, und
- mindestens eine Schaufel (26), die sich radial zwischen den beiden Ringen (22, 24) erstreckt und an diese mit ihren radialen Enden angeschlossen ist,
wobei der äußere Ring (24) erste und zweite Montagemittel (44, 46) für das Leitschaufelsegment (18) auf einem Gehäuse (20) der Turbomaschine umfasst, wobei die ersten und zweiten Montagemittel in Axialrichtung in entgegengesetzten Richtungen ausgerichtet und miteinander durch einen Zwischenabschnitt (41) verbunden sind,
bei dem der äußere Ring (24) ferner mindestens einen axialen Endabschnitt (36) umfasst, der sich von dem Zwischenabschnitt (41) aus erstreckt, der mit einem freien Ende (43) versehen und an das radial äußere Ende der Schaufel (26) angeschlossen ist,
bei dem mindestens ein aufgesetztes Element (601, 602, 603, 604, 605, 606, 607), das einen Dämpfer bildet, geeignet ist, mit dem Endabschnitt (36) in Kontakt zu kommen und
bei dem über einen gegebenen Wert der Schwingungsamplitude des Endabschnittes (36) hinaus das Dämpfungselement (601, 602, 603, 604, 605, 606, 607) und der Endabschnitt (36) geeignet sind, sich in Bezug zueinander zu verschieben, um die Gesamtmasse in Bewegung, die mit dem Endabschnitt (36) verbunden ist, zu variieren und auf diese Weise das Schwingungsverhalten des Endabschnittes (36) zu verändern,
wobei der äußere Ring an mindestens einem axialen Ende einen Hohlraum (42) umfasst, der an dem axialen Ende mündet, wobei sich der Hohlraum (42) zwischen dem Endabschnitt (36) und einer radial äußeren Lasche (38) erstreckt, die eines der ersten und zweiten Montagemittel (44, 46) trägt.

2. Leitschaufelsegment nach Anspruch 1, bei dem der äußere Ring (24) einen stromaufwärtigen Hohlraum, der am stromaufwärtigen Ende des äußeren Ringes mündet, und einen stromabwärtigen Hohlraum umfasst, der am stromabwärtigen Ende des äußeren Ringes mündet, wobei mindestens ein aufgesetztes Element, das einen Dämpfer bildet, in mindestens einem der Hohlräume angeordnet ist.

3. Leitschaufelsegment nach Anspruch 1 oder 2, bei dem der äußere Ring (24) in einem Stück ausgeführt ist.

4. Leitschaufelsegment nach einem der Ansprüche 1 bis 3, bei dem das den Dämpfer bildende aufgesetzte Element in dem Hohlraum (42) des äußeren Ringes (24) angeordnet ist.

5. Leitschaufelsegment nach einem der Ansprüche 1 bis 4, bei dem das den Dämpfer bildende aufgesetzte Element ein Ringabschnitt (601, 602) ist, der geeignet ist, ohne Spiel auf dem Endabschnitt (36) des äußeren Ringes montiert zu werden.

6. Leitschaufelsegment nach Anspruch 5, bei dem der Ringabschnitt (601) ein Abschnitt eines O-Ringes ist.

7. Leitschaufelsegment nach Anspruch 5, bei dem der Ringabschnitt (602) ein Abschnitt eines im Wesentlichen zylindrischen Ringes ist.

8. Leitschaufelsegment nach einem der Ansprüche 1 bis 7, bei dem mindestens eine Aussparung, die eine komplementäre Form zu jener des den Dämpfer bildenden aufgesetzten Elements aufweist, auf dem Endabschnitt (36) ausgebildet ist, der ein axiales Haltemittel für das Dämpfungselement bildet.

9. Leitschaufelsegment nach einem der Ansprüche 1 bis 4, bei dem der Endabschnitt (36) mindestens zum Teil eine dichte Kammer (45) begrenzt, in der das den Dämpfer bildende aufgesetzte Element (607) angeordnet ist.

10. Leitschaufelsegment nach Anspruch 9, bei dem das den Dämpfer bildende aufgesetzte Element (607) ein Pulver ist.

11. Leitschaufelsegment nach Anspruch 9 , bei dem das den Dämpfer bildende aufgesetzte Element (607) eine Flüssigkeit ist.

12. Leitschaufelsegment nach einem der Ansprüche 1 bis 4, bei dem das Dämpfungselement eine Nadel (604, 605, 606), die eine Feder bildet, aufweist, umfassend einen Griffteil (71) und einen Hakenteil (73), der sich vom Griffteil (71) radial nach außen und zu einem offenen axialen Ende des äußeren Ringes hin erstreckt, wobei der Griffteil (71) geeignet ist, radial an dem Endabschnitt (36) des äußeren Ringes (24) zur Anlage zu gelangen, und der Hakenteil (73) geeignet ist, radial an einer gegenüberliegenden Fläche des Endabschnitts (36) zur Anlage zu gelangen.

13. Leitschaufelsegment nach Anspruch 12, bei dem der Griffteil (71) geeignet ist, an dem Zwischenabschnitt (41) des äußeren Ringes (24) zur Anlage zu gelangen.

14. Leitschaufelsegment nach Anspruch 12 oder 13, bei dem der Griffteil (71) mindestens einen Versatz (82) auf seiner radial inneren Seite aufweist.

15. Leitschaufelsegment nach einem der Ansprüche 12 bis 14, bei dem die radial äußere Lasche (38) des äußeren Ringes (24) einen Vorsprung (86) trägt, der radial nach zum Inneren des Hohlraums (42) gerichtet ist, wobei der Vorsprung (86) eine axiale Haltevorrichtung für die Nadel (605, 606) bildet.

16. Leitschaufel einer Turbomaschine, die von einem oder mehreren Leitschaufelsegmenten nach einem der Ansprüche 1 bis 15 gebildet ist.

17. Turbomaschine, umfassend mindestens eine Leitschaufel nach Anspruch 16.

## Claims

1. A stator angular sector (18) for a turbine engine compressor, the sector extending around an axis of radial symmetry (A), and comprising:
· an outer shroud (24) and an inner shroud (22) arranged coaxially one inside the other; and
· at least one vane (26) extending radially between said shrouds (22, 24) and connected thereto at its radial ends;
wherein the outer shroud (24) has first and second mounting means (44, 46) for mounting the stator angular sector (18) on a casing (20) of the engine, said first and second mounting means being oriented parallel to the axis in opposite directions and being connected together by an intermediate portion (41);
wherein the outer shroud (24) has at least one axial end portion (36) extending from said intermediate portion (41), provided with a free end (43), and connected to the radially-outer end of the vane (26);
wherein at least one damper-forming insert (601, 602, 603, 604, 605, 606, 607) is suitable for coming into contact with the end portion (36); and
wherein beyond a given value for the amplitude of vibration of the end portion (36), the damper insert (601, 602, 603, 604, 605, 606, 607) and the end portion (36) are suitable for moving relative to each other so as to vary the total moving mass moving with the end portion (36), thereby modifying the vibratory behavior of said end portion (36),
wherein the outer shroud includes, at least at one axial end, a cavity (42) opening out to said axial end, said cavity (42) extending between the end portion (36) and an outer radial tongue (38) carrying one of the first and second mounting means (44, 46).

2. A stator angular sector according to claim 1, wherein the outer shroud (24) includes an upstream cavity opening out to the upstream end of the outer shroud and a downstream cavity opening out to the downstream end of the outer shroud, at least one damper-forming insert being housed in at least one of said cavities.

3. A stator angular sector according to claim 1 or 2, wherein the outer shroud (24) is made as a single piece.

4. A stator angular sector according to any one of claims 1 to 3, wherein the damper-forming insert is housed in the cavity (42) of the outer shroud (24).

5. A stator angular sector according to any one of claims 1 to 4, wherein the damper-forming insert is a ring portion (601, 602) suitable for being mounted without clearance on the end portion (36) of the outer shroud.

6. A stator angular sector according to claim 5, wherein said ring portion (601) is a portion of a toroidal ring.

7. A stator angular sector according to claim 5, wherein said ring portion (602) is a substantially cylindrical ring portion.

8. A stator angular sector according to any one of claims 1 to 7, wherein at least one recess of shape complementary to the shape of the damper-forming insert is formed on the end portion (36), forming axial retaining means for the damper insert.

9. A stator angular sector according to any one of claims 1 to 4, wherein the end portion (36) defines at least part of a leaktight chamber (45) having the damper-forming insert (607) placed therein.

10. A stator angular sector according to claim 9, wherein the damper-forming insert (607) is a powder.

11. A stator angular sector according to claim 9, wherein the damper-forming insert (607) is a liquid.

12. A stator angular sector according to any one of claims 1 to 4, wherein the damper insert comprises a spring-forming clip (604, 605, 606) having a sleeve portion (71) and a hook portion (73) extending from said sleeve portion (71) radially outwards and towards an open axial end of the outer shroud, said sleeve portion (71) being suitable for bearing radially against the end portion (36) of the outer shroud (24), and said hook portion (73) being suitable for bearing radially against a surface opposite to said end portion (36).

13. A stator angular sector according to claim 12, wherein said sleeve portion (71) is suitable for bearing against the intermediate portion (41) of the outer shroud (24) .

14. A stator angular sector according to claim 12 or claim 13, wherein the sleeve portion (71) includes at least one indentation (82) in its radially-inner face.

15. A stator angular sector according to any one of claims 12 to 14, wherein the radially-outer tongue (38) of the outer shroud (24) carries a projection (86) directed radially towards the inside of the cavity (42), said projection (86) forming an axial retention stop for said clip (605, 606).

16. A turbine engine stator made up of one or more stator angular sectors according to any one of claims 1 to 15.

17. A turbine engine including at least one stator according to claim 16.
